(19) Europäisches Patentamt / European Patent Office / Office européen des brevets

(11) EP 2 606 973 A1

(12) EUROPÄISCHE PATENTANMELDUNG

(43) Veröffentlichungstag: **26.06.2013 Patentblatt 2013/26**

(21) Anmeldenummer: **11195334.5**

(22) Anmeldetag: **22.12.2011**

(51) Int Cl.: ***B01J 39/20*** *(2006.01)* ***C08F 8/34*** *(2006.01)* ***B01J 47/00*** *(2006.01)* ***C08F 220/44*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **LANXESS Deutschland GmbH**
**51369 Leverkusen (DE)**

(72) Erfinder:
- **Schelhaas, Michael**
  **50733 Köln (DE)**
- **Vanhoorne, Pierre**
  **40789 Monheim (DE)**

(54) **Thiolgruppenhaltiges Acrylatharz**

(57) Gegenstand der vorliegenden Erfindung ist ein Verfahren zur Herstellung von neuen Ionenaustauscherharzen auf Basis vernetzter Perlpolymerisate aus Acrylverbindungen, mit Thiolgruppen als funktioneller Gruppe, die eine hohe Aufnahmekapazität für Schwermetalle besitzen., sowie deren Verwendung zur Entfernung von Schwermetallen aus Flüssigkeiten, bevorzugt Prozesswässern in oder aus der Elektronikindustrie, der Galvanikindustrie und der Minenindustrie.

EP 2 606 973 A1

## Beschreibung

Gegenstand der vorliegenden Erfindung ist ein Verfahren zur Herstellung von neuen Ionenaustauscherharzen auf Basis vernetzter Perlpolymerisate aus Acrylverbindungen, mit Thiolgruppen als funktioneller Gruppe, die eine hohe Aufnahmekapazität für Schwermetalle besitzen., sowie deren Verwendung zur Entfernung von Schwermetallen aus Flüssigkeiten, bevorzugt Prozesswässern in oder aus der Elektronikindustrie, der Galvanikindustrie und der Minenindustrie.

Seit längerer Zeit werden Ionenaustauscher zur Entfernung von Wertmetallen und Schwermetallen wie Zinn, Cobalt, Nickel, Kupfer, Zink, Blei, Uran, Wismuth, Vanadium, Elemente der Platingruppe wie Ruthenium, Osmium, Iridium, Rhodium, Rhenium, Palladium, Platin sowie die Edelmetalle Gold und Silber insbesondere aus wässrigen Lösungen eingesetzt. Zu diesem Zweck werden bevorzugt neben Kationen- oder Anionenaustauschern auch thiol-funktionalisierte Harze eingesetzt.

Thiol-funktionalisierte Harze auf der Basis von Styrolperlpolymerisaten sind bekannt und werden zum Beispiel von der Firma Rohm & Haas unter dem Namen Ambersep® GT74 vertrieben. Andere kommerziell erhältliche Harze sind Ionac® SR4, Purolite® S-920 oder Resintech® SIR-200. Alle diese Harze haben ein Polystyrol-Rückgrat und eine Benzylthiol- bzw. eine Phenylthiolfunktionalität. (WSRC-TR-2002-00046, Rev. 0, Mercury Removal Performance of Amberlite® GT-73A, Purolit® S-920, Ionac® SR-4 and SIR-200® Resins, F. F. Fondeur, W. B. Van Pelt, S. D. Fink, January 16, 2002, published by U.S. Department of Commerce).

Harze auf Styrolbasis weisen generell eine geringe osmotische Stabilität auf und sind lipophil, d.h. sie sind empfindlich gegenüber organischen Verunreinigungen.

Hydroxythiolharze auf Methacrylatbasis sind ebenfalls im Markt vertreten: Spheron® Thiol 1000. Methacrylharze sind ebenfalls spröde und empfindlich gegen osmotische Belastung. Zudem ist der Schwefelgehalt des Moleküls aufgrund der sonstigen Hydroxyfunktionalität gering, was einer geringen spezifischen Kapazität entspricht.

Polymere mit thiolfunktionalisierten Acrylaten sind in der Literatur beschrieben. Nobuharu Hisano et al.: "Entrapment of islets into reversible disulfide hydrogels", J. Biomed. Mater. Res. 1998, 40 (1), 115-123.

Valessa Barbier et al.: "Comb-like copolymers as self-coating, low-viscosity and high-resolution matrices for DNA sequencing", Electrophoresis 2002, 23, 1441-1449.

Stephanie A. Robb et al.: Simultaneously Physically and Chemically Gelling Polymer System Utilizing a Poly(NIPAAm-co-cysteamine)-Based Copolymer, Biomacromolecules 2007, 8, 2294-2300.

Alle diese beschriebenen Polymere sind allerdings keine vernetzten Perlen mit Ionenaustauschereigenschaften, sondern lineare, über die Thiolgruppe vergelbare (vemetzbare) Polymere mit Anwendungen in der Biochemie und Bioanalytik.

Acrylatbasierte Ionentauscher sind bekannt und kommerziell gut verfügbar, zum Beispiel unter den Handelsnamen Lewatit® CNP80 oder Amberlite® IRA67.

Acrylatbasierte Ionenaustauscher mit Thiol-Funktionalität sind nicht bekannt.

Gesucht sind Ionenaustauscher mit einer Thiol-Funktionalität, die bei einem Schwefelgehalt von mindestens 20 % und hoher osmotischer Stabilität gut Schwermetalle aufnehmen.

Lösung der Aufgabe und somit Gegenstand der vorliegenden Erfindung sind Ionenaustauscherharze mit weinigstens einer Thiol-Funktionalität erhältlich durch Umsetzung von vernetzten Perlpolymerisaten aus Acrylverbindungen mit Aminothiolen.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

In einer bevorzugten Ausführungsform betrifft die vorliegende Erfindung Acrylatbasierte Ionenaustauscher mit wenigstens einer Thiol-Funktionalität, bevorzugt mit einem Schwefelgehalt von mindestens 20 %, erhältlich durch

a) Umsetzen einer organischen Phase enthaltend Monomertröpfchen aus wenigstens einer Acrylverbindung und wenigstens einer multifunktionell ethylenisch ungesättigten Verbindung sowie gegebenenfalls wenigstens einem Porogen und/oder gegebenenfalls einem Initiator oder einer Initiatorkombination in einer wässrigen Phase zu einem vernetzten Perlpolymerisat und

b) Umsetzen dieses vernetzten Perlpolymerisats mit weinigstens einem Aminothiol durch dessen Zugabe zur wässrigen Phase oder nach Zwischenisolierung der aus a) erhaltenen Perlpolymerisate, bevorzugt durch Filtration, Dekantieren oder Zentrifugation, durch deren erneute Suspendierung in einer wässrigen Phase und Zugabe des Aminothiols.

In einer bevorzugten Ausftihrungsform kann sich an die Stufe b) noch

c) die Umladung des aus Stufe b) erhaltenen Acrylatbasierten Ionenaustauschers mit Thiol-Funktionalität in die

Na-Form anschließen.

Die vorliegende Erfindung betrifft ferner ein Verfahren zur Herstellung von Acrylatbasierten Ionenaustauschern mit Thiol-Funktionalität, dadurch gekennzeichnet, dass man

a) eine organische Phase enthaltend Monomertröpfchen aus wenigstens einer Acrylverbindung und wenigstens einer multifunktionell ethylenisch ungesättigten Verbindung sowie gegebenenfalls wenigstens einem Porogen und/oder gegebenenfalls einem Initiator oder einer Initiatorkombination in einer wässrigen Phase zu einem vernetzten Perlpolymerisat umsetzt und

b) dieses vernetzte Perlpolymerisat mit wenigstens einem Aminothiol durch dessen Zugabe zur wässrigen Phase oder nach Zwischenisolierung der aus a) erhaltenen Perlpolymerisate, bevorzugt durch Filtration, Dekantieren oder Zentrifugation, und deren erneute Suspendierung in einer wässrigen Phase und Zugabe des Aminothiols umsetzt..

Erfindungsgemäß weisen die nach Stufe b) erhältlichen Acrylatbasierten Ionenaustauscher mit Thiol-Funktionalität bevorzugt funktionelle Gruppen der Strukturen C(O)NH-alkyl-SH und/oder C(O)NH-alkyl-SNa (im Falle der Umladung) auf, wobei Alkyl für eine lineare oder verzweigte Alkylkette mit 2 bis 6 Kohlenstoffatomen steht.

In einer besonders bevorzugten Ausführungsform weisen die nach Stufe b) erhältlichen Acrylatbasierten Ionenaustauscher mit Thiol-Funktionalität wenigstens eine funktionelle Gruppe der Struktur

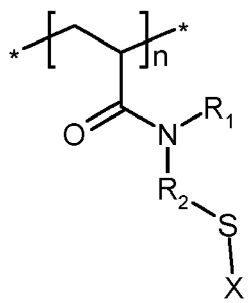

auf, worin

$R_1$ für H oder für einen $C_1$-$C_3$-Alkylrest, bevorzugt für H steht,

$R_2$ für eine lineare oder verzweigte $C_2$ bis $C_6$ Alkylkette, bevorzugt für eine linear $C_2$-Kette steht und

X für H oder nach Umladung für Na steht, wobei der in Klammern mit n indexierte Bereich für das Polymergerüst des Acrylatbasierten Ionenaustauschers mit Thiol-Funktionalität steht und X für Na steht, wenn eine Umladung gemäß Schritt c) erfolgte.

Die erfindungsgemäßen Acrylatbasierten Ionenaustauscher mit Thiol-Funktionalität weisen eine gelförmige oder eine makroporöse Struktur auf, bevorzugt weisen sie eine makroporöse Struktur auf, die man durch Zugabe wenigstens eines Porogens zur organischen Phase erhält..

In Verfahrensschritt a) wird als Monomer wenigstens eine Acrylverbindung und als Vernetzer wenigstens eine multifunktionell ethylenisch ungesättigte Verbindung eingesetzt. Es ist jedoch auch möglich, als Monomer Mischungen zweier oder mehrerer Acrylverbindungen mit gegebenenfalls zusätzlichen monovinylaromatischen Verbindungen und als Vernetzer Mischungen zweier oder mehrerer multifunktionell ethylenisch ungesättigter Verbindungen einzusetzen.

Als Acrylverbindungen im Sinne der vorliegenden Erfindung werden im Verfahrensschritt a) bevorzugt Acrylsäureester mit verzweigten oder unverzweigten $C_1$-$C_6$-Alkylresten und Nitrile der Acrylsäure eingesetzt. Besonders bevorzugt werden Acrylsäuremethylester, Acrylsäurebutylester oder Acrylnitril eingesetzt. Ganz besonders bevorzugt werden Mischungen der Acrylverbindungen, insbesondere bevorzugt Mischungen von Acrylsäuremethylester und Acrylnitril oder von Acrylsäurebutylester und Acrylnitril eingesetzt.

Die in einer bevorzugten Ausführungsform zugesetzten monovinylaromatischen Verbindungen sind bevorzugt Styrol, Methylstyrol, Ethylstyrol, Chlorstyrol oder Vinylpyridin. Im Falle ihres Einsatzes werden diese monovinylaromatischen Verbindungen bevorzugt in Mengen von 0,1 bis 20 Gew.-%, bevorzugt 0,1 bis 10 Gew.-%, bezogen auf die Gesamtsumme von Monomeren und Vernetzern, zugesetzt.

Multifunktionell ethylenisch ungesättigte Verbindungen - auch Vernetzer genannt - für die vernetzten Perlpolymerisate sind bevorzugt Verbindungen der Reihe Butadien, Isopren, Divinylbenzol, Divinyltoluol, Trivinylbenzol, Divinylnaphtalin, Trivinylnaphtalin, Divinylcyclohexan, Trivinylcyclohexan, Triallycyanurat, Triallylamin, 1,7-Octadien, 1,5-Hexadien, Cyclopentadien, Norbornadien, Diethylenglykoldivinylether, Triethylenglykoldivinylether, Tetraethylenglykoldivinylether, Butandioldivinylether, Ethylenglycoldivinylether, Ethylenglycoldimethacrylat, Trimethylolpropantrimethacrylat, Allylmethacrylat, Cyclohexandimethanoldivinylether, Hexandioldivinylether oder Trimethylolpropantrivinylether. Besonders bevorzugt werden Divinylbenzol, 1,7-Octadien oder Diethylenglykoldivinylether eingesetzt. Kommerzielle Divinylbenzolqualitäten, die neben den Isomeren des Divinylbenzols auch Ethylvinylbenzol enthalten, sind ausreichend. In einer bevorzugten Ausführungsform können auch Mischungen unterschiedlicher Vernetzer, besonders bevorzugt Mischungen aus Divinylbenzol und Divinylether eingesetzt werden. Ganz besonders bevorzugt werden Mischungen aus Divinylbenzol, 1,7-Octadien oder Diethylenglykoldivinylether eingesetzt. Insbesondere besonders bevorzugt sind Mischungen aus Divinylbenzol und 1,7-Octadien.

Die multifunktionell ethylenisch ungesättigten Verbindungen werden bevorzugt in Mengen von 1-20 Gew.-%, besonders bevorzugt 2-12 Gew.-%, insbesondere bevorzugt 4-10 Gew.-%, bezogen auf auf die Gesamtsumme von Monomeren und Vernetzern, eingesetzt. Die Art der als Vernetzer einzusetzenden multifunktionell ethylenisch ungesättigten Verbindungen wird im Hinblick auf die spätere Verwendung des Perlpolymerisats ausgewählt.

Die Monomertröpfchen enthalten in einer bevorzugten Ausführungsform der vorliegenden Erfindung einen Initiator oder Mischungen von Initiatoren zur Auslösung der Polymerisation. Für das erfindungsgemäße Verfahren bevorzugt einzusetzende Initiatoren sind Peroxyverbindungen, besonders bevorzugt Peroxyverbindungen der Reihe Dibenzoylperoxid, Dilauroylperoxid, Bis(p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen, bevorzugt 2,2'-Azobis(isobutyronitril) oder 2,2'-Azobis(2-methylisobutyronitril). Ganz besonders bevorzugt ist Dibenzoylperoxid.

Die Initiatoren werden bevorzugt in Mengen von 0,05 bis 2,5 Gew.-%, besonders bevorzugt 0,1 bis 1,5 Gew.-%, bezogen auf die auf die Gesamtsumme von Monomeren und Vernetzern, angewendet.

Bevorzugte Perlpolymerisate im Sinne der vorliegenden Erfindung, hergestellt durch Verfahrensschritt a), weisen eine makroporöse Struktur auf. Die Begriffe makroporös bzw. gelförmig sind in der Fachliteratur bereits eingehend beschrieben worden (Siehe Pure Appl. Chem., Vol. 76, No. 4, pp. 900, 2004).

Zur Erzeugung der makroporösen Struktur wird in den Monomertröpfchen wenigstens ein Porogen verwendet. Hierfür sind organische Lösungsmittel geeignet, die das entstandene Polymerisat schlecht lösen bzw. quellen. Bevorzugt einzusetzende Porogene sind Verbindungen der Reihe Hexan, Octan, Isooctan, Isododecan, Methylethylketon, Dichlorethan, Dichlorpropan, Butanol oder Octanol und deren Isomeren. Es können auch Gemische von Porogenen eingesetzt werden.

Zur Erzeugung der makroporösen Struktur wird das Porogen bzw. Porogengemisch in Mengen von 5 bis 70 Gew.-%, bevorzugt 10 bis 50 Gew.-%, bezogen auf die Gesamtsumme von Monomeren und Vemetzem, eingesetzt.

Ohne den Zusatz von Porogen werden gelförmige Harze erhalten, die ebenfalls Bestandteil der vorliegenden Erfindung sind.

Bei der Herstellung der Perlpolymerisate gemäß Verfahrensschritt a) kann die wässrige Phase in einer bevorzugten Ausführungsform wenigstens einen gelösten Polymerisationsinhibitor enthalten. Als Polymerisationsinhibitoren im Sinne der vorliegenden Erfindung kommen bevorzugt sowohl anorganische als auch organische Stoffe in Frage. Besonders bevorzugte anorganische Polymerisationsinhibitoren sind Stickstoffverbindungen der Reihe Hydroxylamin, Hydrazin, Natriumnitrit oder Kaliumnitrit, Salze der phosphorigen Säure, insbesondere Natriumhydrogenphosphit, sowie schwefelhaltige Verbindungen, insbesondere Natriumdithionit, Natriumthiosulfat, Natriumsulfat, Natriumbisulfit, Natriumrhodanid oder Ammoniumrhodanid. Besonders bevorzugte organische Polymerisationsinhibitoren sind phenolische Verbindungen der Reihe Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Polymerisationsinhibitoren sind stickstoffhaltige Verbindungen. Hierzu gehören Hydroxylaminderivate bevorzugt der Reihe N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate, bevorzugt N,N-Hydrazinodiessigsäure, Nitrosoverbindungen, bevorzugt N-Nitrosophenylhydroxylamin, N-Nitrosophenylhydroxylamin-Ammoniumsalz oder N-Nitrosophenylhydroxylamin-Aluminiumsalz. Die Konzentration des in einer bevorzugten Ausführungsform einzusetzenden Polymerisationsinhibitors beträgt 5-1000 ppm (bezogen auf die wässrige Phase), vorzugsweise 10-500 ppm, besonders bevorzugt 10-250 ppm.

In einer bevorzugten Ausführungsform erfolgt die Polymerisation der Monomertröpfchen zum kugelförmigen, monodispersen Perlpolymerisat in Anwesenheit eines oder mehrerer Schutzkolloide in der wässrigen Phase. Als Schutzkolloide eignen sich natürliche oder synthetische wasserlösliche Polymere, der Reihe Gelatine, Stärke, Polyvinylalkohol, Polyvinylpyrrolidon, Polyacrylsäure, Polymethacrylsäure oder Copolymerisate aus Acrylsäure oder Acrylsäureestern. Erfindungsgemäß bevorzugt ist Gelatine. Erfindungsgemäß ebenfalls bevorzugt sind auch Cellulosederivate, insbesondere Celluloseester oder Celluloseether, ganz besonders bevorzugt Carboxymethylcellulose Methylhydroxyethylcellulose, Methylhydroxypropylcellulose oder Hydroxyethylcellulose.

Bevorzugt sind auch Kondensationsprodukte aus aromatischen Sulfonsäuren und Formaldehyd. Insbesondere bevorzugt werden Naphthalinsulfonsäure-Formaldehyd-Kondensate.

Die Schutzkolloide können einzeln oder als Mischungen verschiedener Schutzkolloide verwendet werden. Ganz besonders bevorzugt wird eine Mischung aus Hydroxyethylcellulose und Naphthalinsulfonsäure-Formaldehyd-Kondensat bzw. dessen Na-Salz..

Die Einsatzmenge für die Summe der Schutzkolloide beträgt bevorzugt 0,05 bis 1 Gew.-% bezogen auf die wässrige Phase, besonders bevorzugt 0,05 bis 0,5 Gew.-%.

In einer bevorzugten Ausführungsform kann die Polymerisation zum kugelförmigen Perlpolymerisat in Verfahrensschritt a) auch in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt 0,5-500 mmol/1, vorzugsweise 2,5-100 mmol/1.

In einer weiteren bevorzugten Ausführungsform kann die Polymerisation zum kugelförmigen Perlpolymerisat in Verfahrensschritt a) auch in Anwesenheit eines Salzes in der wässrigen Phase erfolgen. Dadurch wird die Löslichkeit der organischen Verbindungen im Wasser reduziert. Bevorzugte Salze sind Halogene, Sulfate oder Phosphate der Alkali- und Erdalkalimetalle. Sie können im Konzentrationsbereich bis zur Sättigung der wässrigen Phase eingesetzt werden. Der optimale Bereich liegt daher für jedes Salz anders und muss ausgetestet werden.

Besonders bevorzugt ist Natriumchlorid. Der bevorzugte Konzentrationsbereich liegt bei 15-25 Gewichts-% bezogen auf die wässrige Phase.

Die Rührgeschwindigkeit bei der Polymerisation hat vor allem am Anfang der Polymerisation einen wesentlichen Einfluss auf die Teilchengröße. Grundsätzlich werden bei höheren Rührgeschwindigkeiten kleinere Teilchen erhalten. Durch Anpassung der Rührgeschwindigkeit kann der Fachmann die Teilchengröße der Perlpolymerisate in den gewünschten Bereich steuern. Es können verschiedene Rührertypen eingesetzt werden. Besonders geeignet sind Gitterrührer mit axialer Wirkung. In einem 4 Liter Laborglasreaktor werden typischerweise Rührgeschwindigkeiten von 100 bis 400 Upm (Umdrehungen pro Minute) eingesetzt.

Die Polymerisationstemperatur richtet sich nach der Zerfallstemperatur des eingesetzten Initiators. Sie liegt bevorzugt zwischen 50 bis 180°C, besonders bevorzugt zwischen 55 und 130°C. Die Polymerisation dauert bevorzugt 0,5 bis einige Stunden, besonders bevorzugt 2 bis 20 Stunden, ganz besonders bevorzugt 5 bis 15 Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. In einer bevorzugten Ausführungsform wird nach der Polymerisation das Perlpolymerisat mit üblichen Methoden, bevorzugt durch Filtrieren, Dekantieren oder Zentrifugation, isoliert und gegebenenfalls gewaschen.

Die aus Verfahrensschritt a) erhältlichen Perlpolymerisate zeigen bevorzugt Perldurchmesser im Bereich von 100 $\mu$m bis 2000 $\mu$m.

Die nach Verfahrensschritt a) hergestellten vernetzten Perlpolymerisate auf Basis von Acrylverbindungen werden im Verfahrensschritt b) durch Umsetzung mit wenigstens einem Aminothiol weiterverarbeitet.

Erfindungsgemäß bevorzugt einzusetzende Aminothiole sind bei Raumtemperatur flüssig. Erfindungsgemäß besonders bevorzugt einzusetzende Aminothiole sind bei Raumtemperatur flüssige Verbindungen der allgemeinen Formel $H_2N$-Alkyl-SH, worin Alkyl für ein lineare oder verzweigte Alkylkette mit 2 bis 6 Kohlenstoffatomen steht. Ganz besonders bevorzugt sind bei Raumtemperatur flüssige Verbindungen der allgemeinen Formel $R_1$NH-Alkyl-SH, worin Alkyl für ein lineare oder verzweigte Alkylkette mit 2 bis 4 Kohlenstoffatomen steht und $R_1$ für H oder für einen $C_1$-$C_3$-Alkylrest, bevorzugt für H steht. Insbesondere bevorzugt sind bei Raumtemperatur flüssige Verbindungen der allgemeinen Formel $H_2N$-Alkyl-SH, worin Alkyl für ein Alkylkette aus 2 Kohlenstoffatomen steht, so dass das Gesamtmolekül Cysteamin ist.

Die Aminothiole werden bevorzugt im molaren Verhältnis, bezogen auf die umzusetzenden Ester- bzw. Nitrilgruppen, von 0,7 bis 8 mol eingesetzt vorzugsweise in Mengen von 0,8 - 3 mol Aminothiol pro mol Ester- bzw. Nitrilgruppen, besonders bevorzugt 1,0 bis 1,5 mol Aminothiol pro mol Ester- bzw. Nitrilgruppen.

Erfindungsgemäß ganz besonders bevorzugt werden in der organischen Phase des Verfahrensschrittes a) des erfindungsgemäßen Verfahrens Acrylnitril, Acrylsäuremethylester, Divinylbenzol, 1,7-Octadien, Dibenzoylperoxid oder Dichlorethan eingesetzt.

Erfindungsgemäß ganz besonders bevorzugt werden in der wässrigen Phase des Verfahrensschrittes a) des erfindungsgemäßen Verfahrens Hydroxyethylcellulose in VE-Wasser, Natriumchlorid in VE-Wasser, das Natriumsalz von Naphthalinsulfonsäureformaldehyd-Kondensat oder Dinatriumhydrogenphosphat-Dodekahydrat eingesetzt.

Die Umsetzung in Verfahrensschritt b) erfolgt bevorzugt bei Temperaturen von 80 bis 250°C, besonders bevorzugt bei 115 bis 160 °C. Die Reaktionsdauer wählt man im Allgemeinen so, dass die Nitril- bzw. Estergruppen quantitativ umgesetzt werden; der erzielbare Umsatz beträgt mindestens 80%, vorzugsweise mindestens 90%, insbesondere mindestens 95 %.

Die aus Verfahrensschritt b) erhaltenen Acrylatbasierten Ionenaustauscher mit Thiol-Funktionalität können in der SH-Form oder nach Umladung in der SNa-Form verwendet werden. Die Umladung erfolgt in dem in einer bevorzugten Ausführungsform durchzuführenden Verfahrensschritt c) mit wässriger Natronlauge, bevorzugt. in Gegenwart von Natriumchlorid oder Natriumsulfat. Die Umladung erfolgt bevorzugt in einer Säule oder gerührt in einem Kessel. Zur vollständigen Umladung wird bevorzugt ein molares Verhältnis von 1,1 bis 5 mol NaOH pro mol

Die erfindungsgemäß herzustellenden Acrylatbasierten Ionenaustauscher mit Thiol-Funktionalität eignen sich zur Adsorption von Metallen, insbesondere Schwermetallen und Edelmetallen und ihren Verbindungen aus wässrigen Lösungen und organischen Flüssigkeiten, bevorzugt aus sauren, wässrigen Lösungen. Die erfindungsgemäß herzustellenden Acrylatbasierten Ionenaustauscher mit Thiol-Funktionalität eignen sich besonders zur Entfernung von Schwermetallen oder Edelmetallen aus wässrigen Lösungen, insbesondere aus wässrigen Lösungen von Erdalkalien oder Alkalien, aus Solen der Alkalichloridelektrolyse, aus wässrigen Salzsäuren, aus Abwässern oder Rauchgaswäschen, aber auch aus flüssigen oder gasförmigen Kohlenwasserstoffen, Carbonsäuren wie Adipinsäure, Glutarsäure oder Bernsteinsäure, Erdgasen, Erdgaskondensaten, Erdölen oder Halogenkohlenwasserstoffen, wie Chlor- oder Fluorkohlenwasserstoffen oder Fluor/ChlorKohlenwasserstoffen. Die erfindungsgemäßen Acrylatbasierten Ionenaustauscher mit Thiol-Funktionalität eignen sich aber auch zur Entfernung von Schwermetallen, insbesondere Quecksilber, Silber, Cadmium oder Blei aus Stoffen die während einer elektrolytischen Behandlung, beispielsweise einer Dimerisierung von Acrylnitril zu Adiponitril, umgesetzt werden.

Besonders geeignet sind die erfindungsgemäß herzustellenden Acrylatbasierten Ionenaustauscher mit Thiol-Funktionalität zur Entfernung von Quecksilber, Eisen, Chrom, Kobalt, Nickel, Kupfer, Zink, Blei, Cadmium, Mangan, Uran, Vanadium, Ruthenium, Rhodium, Palladium, Iridium, Osmium, Platin sowie Gold und Silber aus den oben aufgeführten Lösungen, Flüssigkeiten oder Gasen.

Insbesondere eignen sich die erfindungsgemäßen Acrylatbasierten Ionenaustauscher mit Thiol-Funktionalität zur Entfernung von Quecksilber, Kupfer, Cadmium, Ruthenium, Rhodium, Palladium, Iridium, Osmium, Platin sowie Gold und Silber aus den oben aufgeführten Lösungen, Flüssigkeiten oder Gasen.

Ganz besonders geeignet sind sie auch für die Entfernung bzw. Rückgewinnung von Edelmetallenthaltenden Katalysatorresten aus Lösungen.

Neben der Metallurgie zur Gewinnung von Wertmetallen eignen sich die Acrylatbasierten Ionenaustauscher mit Thiol-Funktionalität hervorragend für verschiedenste Einsatzgebiete in der chemischen Industrie, der Elektronik-Industrie, der Abfall-Entsorgungs/Verwertungs-Industrie oder der Galvano- oder Oberflächentechnik.

VE-Wasser im Sinne der vorliegenden Erfindung steht für Wasser, das eine Leitfähigkeit von 0,1 bis 10 $\mu$S besitzt mit einem Gehalt an löslichen Metallionen nicht größer als 1 ppm, bevorzugt nicht größer als 0,5 ppm, für Fe, Co, Ni, Mo, Cr, Cu als individuelle Komponenten ist und nicht größer als 10 ppm, bevorzugt nicht größer als 1 ppm, für die Summe der genannten Metalle.

Im Rahmen der Untersuchungsmethoden zur vorliegenden Erfindung wurde die Bestimmung der Silberkapazität wie folgt durchgeführt:

Beladung

25 ml Harz wurden mit VE-Wasser in eine Kunststoffflasche gespült und durch Absaugen vom überstehenden Wasser befreit.

100 ml einer 75 g $Ag^+$/1 Silber-Stammlösung wurden in einen 1000 ml Messkolben pipettiert und mit VE-Wasser bis zur Marke aufgefüllt, umgeschüttelt und auslauffrei in die Kunststoffflasche überführt.

Die Kunststoffflasche mit der Lösung und dem Harz wurde 16 Stunden gerührt.

Titration

Für die Bestimmung der Silberkapazität wurden 5 ml der verdünnten Silber-Stammlösung und 10 ml aus der mit dem Harz gerührten Lösung entnommen und jeweils nach Zusatz von 5,5 ml $HNO_3/Ca(NO_3)_2$-Lösung und 7 ml Polyvinylalkohol mit einer Natriumchloridlösung, c (NaCl) = 0,1 mol/l mittels Titrino titriert.

Berechnungen

Berechnung der Ag+-Kapazität :

$$\text{Verbrauch } 0{,}1\,\text{mol/l}\ \ \text{NaCl} \cdot \text{Faktor} \cdot \text{Verdünnung} = \text{Gehalt Silber}$$

$$(\text{Faktor: } 1\,\text{ml NaCl } 0{,}1\,\text{mol/l} = 10{,}79\ \text{mg Ag})$$

Beispiel:

Silber-Stammlösung: $3{,}427\ \text{ml} \cdot 10{,}79\,\frac{\text{mg Ag}}{\text{ml}} \cdot \frac{1000\ \text{ml}}{5\ \text{ml}} = 7395{,}5\ \text{mg Ag}$

Nach 16 Stunden : $4{,}750\ \text{ml} \cdot 10{,}79\,\frac{\text{mg Ag}}{\text{ml}} \cdot \frac{995\ \text{ml}}{10\ \text{ml}} = 5099{,}6\ \text{mg Ag}$

Vom Harz aufgenommene Ag-Menge: 7395,5 ml Ag - 5099,6 mg Ag = 2295,9 mg Ag

Eingesetzte Harzmenge: 25 ml

Silber-Kapazität: 2,30 g Ag / 25 ml Harz·40 = 91,8 g Ag / 1Harz

Ag-Äquivalentgewicht: 107,9 g Ag / eq

Silber-Kapazität: $\frac{91{,}8\ \text{g Ag / l Harz}}{107{,}9\ \text{g / Ag / eq}} = 0{,}85\ \text{eq / l Harz}$

**Beispiele**

**Beispiel 1**

Herstellung des vernetzten Perlpolymerisates

Die Polymerisation erfolgte in einem 3 Liter-Glasplanschliffgefäß mit Glasrührer, Pt 100-Temperaturfühler, Rückflusskühler, Wasserabscheider und Thermostat mit Steuereinheit.

**Wässrige Phase**

| | |
|---|---|
| 2,47 g | Hydroxyethylcellulose in |
| 195 ml | Vollentsalztes Wasser (VE-Wasser) |
| 326 g | Natriumchlorid (technisch) in |
| 1231 ml | VE-Wasser |
| 3,64 g | Na-Salz von Naphthalinsulfonsäureformaldehyd-Kondensat (95%ig) in |
| 19,6 g | Dinatriumhydrogenphosphat Dodekahydrat |

**Organische Phase**

| | |
|---|---|
| 657 g | Acrylnitril |

(fortgesetzt)

| | |
|---|---|
| 147 g | Acrylsäuremethylester |
| 42,5 g | Divinylbenzol (80%ig) |
| 17,2 g | 1,7-Octadien |
| 3,53 g | Dibenzoylperoxid (75%ig) |
| 192 g | Dichlorethan |

Die wässrige Phase wurde vorgelegt und die vorgemischte organische Phase zugegeben. Dann wurde unter Rühren in 90 Minuten auf 64°C geheizt und diese Temperatur für 12 h gehalten. Dann wurde in 30 Minuten auf 100°C geheizt und diese Temperatur für 3 h gehalten. Dann wurde abgekühlt und über ein Sieb gewaschen.
Die Ausbeute betrug 1130 ml bzw. 966 g feuchtes Produkt.
Das Trockengewicht betrug 0,72 g / ml.

**<u>Beispiel 2</u>**

Herstellung des vernetzten Perlpolymerisates mit anderer Porosität

Die Polymerisation erfolgte in einem 3 Liter-Glasplanschliffgefäß mit Glasrührer, Pt 100-Temperaturfühler, Rückflusskühler, Wasserabscheider und Thermostat mit Steuereinheit.

**<u>Wässrige Phase</u>**

| | |
|---|---|
| 2,74 g | Hydroxyethylcellulose in |
| 252 ml | Vollentsalztes Wasser (VE-Wasser) |
| 436 g | Natriumchlorid (technisch) in |
| 1578 ml | VE-Wasser |
| 4,7 g | Na-Salz von Naphthalinsulfonsäureformaldehyd-Kondensat (95%ig) in |
| 18,8 g | Dinatriumhydrogenphosphat Dodekahydrat |

**<u>Organische Phase</u>**

| | |
|---|---|
| 482 g | Acrylnitril |
| 108 g | Acrylsäuremethylester |
| 40,7 g | Divinylbenzol (80%ig) |
| 12,5 g | 1,7-Octadien |
| 3,93 g | Dibenzoylperoxid (75%ig) |
| 64,3 g | Dichlorethan |

Die wässrige Phase wurde vorgelegt und die vorgemischte organische Phase zugegeben. Dann wurde unter Rühren in 90 Minuten auf 61°C geheizt und diese Temperatur für 7 h gehalten. Dann wurde in 30 Minuten auf 100°C geheizt und diese Temperatur für 4 h gehalten. Dann wurde abgekühlt und über ein Sieb gewaschen.
Die Ausbeute betrug 855 ml bzw. 696 g feuchtes Produkt.
Das Trockengewicht betrug 0,72 g / ml.

**Beispiel 3**

Umsetzung des vernetzten Perlpolymerisates aus Beispiel 1 mit Aminothiol, hier Cysteamin

In einem 1-Liter Planschliffgefäß mit Glasrührer, Kühler, Temperaturfühler und Thermostat mit Steuereinheit wurden 100 ml Perlpolymerisat aus Beispiel 1, 120 ml VE-Wasser, 160,7 g Cysteaminhydrochlorid vorgelegt und bei Raumtemperatur unter Rühren 111g Natronlauge 50% mittels Tropftrichter zugegeben. Die Mischung wurde dann für 24 h auf Rückfluss erhitzt.

Die abgekühlte Mischung wurde in einer Säule mit VE-Wasser gewaschen, bis der Ablauf etwa pH 8 erreichte.

Die Ausbeute betrug 238 ml bzw. 205 g feuchtes Produkt.

Das Trockengewicht betrug 0,61 g / ml.

Die Silberkapazität betrug 96,7 g Silber / Liter Harz, das entspricht 0,90 eq/Liter Harz.

Die Elementaranalyse lautete:

C: 51,3%

H: 6,9%

N: 9,9%

S: 23,1 %

**Beispiel 4**

Umsetzung des vernetzte Perlpolymerisates aus Beispiel 12 mit Aminothiol, hier Cysteamin

In einem 1-Liter Planschliffgefäß mit Glasrührer, Kühler, Temperaturfühler und Thermostat mit Steuereinheit wurden 100 ml Perlpolymerisat aus Beispiel 1, 120 ml VE-Wasser, 154,3 g Cysteaminhydrochlorid vorgelegt und bei Raumtemperatur unter Rühren 107 g Natronlauge 50% mittels Tropftrichter zugegeben. Die Mischung wurde dann für 24 h auf Rückfluss erhitzt.

Die abgekühlte Mischung wurde in einer Säule mit VE-Wasser gewaschen, bis der Ablauf etwa pH 8 erreichte.

Die Ausbeute betrug 209 ml bzw. 180 g feuchtes Produkt.

Das Trockengewicht betrug 0,68 g / ml.

Die Silberkapazität betrug 47,7 g Silber / Liter Harz, das entspricht 0,44 eq / Liter Harz.

Die Elementaranalyse lautete:

C: 50,8 %
H: 6,9%
N: 9,7 %
S: 25,5 %

**Patentansprüche**

1. Ionenaustauscherharze mit wenigstens einer Thiol-Funktionalität erhältlich durch Umsetzung von vernetzten Perlpolymerisaten aus Acrylverbindungen mit Aminothiolen.

2. Acrylatbasierte Ionenaustauscher gemäß Anspruch 1 erhältlich durch

   a) Umsetzen einer organischen Phase enthaltend Monomertröpfchen aus wenigstens einer Acrylverbindung und wenigstens einer multifunktionell ethylenisch ungesättigten Verbindung sowie gegebenenfalls wenigstens einem Porogen und/oder gegebenenfalls einem Initiator oder einer Initiatorkombination in einer wässrigen Phase zu einem vernetzten Perlpolymerisat und
   b) Umsetzen dieses vernetzten Perlpolymerisats mit weinigstens einem Aminothiol durch dessen Zugabe zur wässrigen Phase oder nach Zwischenisolierung der aus a) erhaltenen Perlpolymerisate, bevorzugt durch Filtration, Dekantieren oder Zentrifugation, durch deren erneute Suspendierung in einer wässrigen Phase und Zugabe des Aminothiols.

3. Acrylatbasierte Ionenaustauscher gemäß Anspruch 1 oder 2, **dadurch gekennzeichnet, dass** diese einen Schwefelgehalt von mindestens 20 % aufweisen.

4. Acrylatbasierte Ionenaustauscher gemäß der Ansprüche 2 oder 3, **dadurch gekennzeichnet, dass** das Aminothiol bei Raumtemperatur flüssig ist.

5. Acrylatbasierte Ionenaustauscher gemäß einem der Ansprüche 2 bis 4, **dadurch gekennzeichnet, dass** sich an die Stufe b) ein Schritt

   c) die Umladung des aus Stufe b) erhaltenen Acrylatbasierten Ionenaustauschers mit Thiol-Funktionalität in die Na-Form anschließt.

6. Acrylatbasierte Ionenaustauscher t gemäß der Ansprüche 1 bis 5, **dadurch gekennzeichnet, dass** diese wenigstens eine funktionelle Gruppe der Struktur

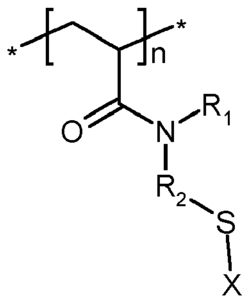

aufweisen, worin
$R_1$ für H oder für einen $C_1C_3$-Alkylrest, bevorzugt für H steht,
$R_2$ für eine lineare oder verzweigte $C_2$ bis $C_6$-Alkylkette, bevorzugt für eine lineare $C_2$-Kette steht und
X für H oder nach Umladung für Na steht, wobei der in Klammern mit n indexierte Bereich für das Polymergerüst des Acrylatbasierten Ionenaustauschers mit Thiol-Funktionalität steht.

7. Acrylatbasierte Ionenaustauscher gemäß der Ansprüche 1 bis 6, **dadurch gekennzeichnet, dass** diese funktionelle Gruppen der Strukturen C(O)NH-alkyl-SH und/oder C(O)NH-alkyl-SNa aufweisen, wobei Alkyl für eine lineare oder verzweigte Alkylkette mit 2 bis 6 Kohlenstoffatomen steht.

8. Acrylatbasierte Ionenaustauscher gemäß der Ansprüche 1 bis 7, **dadurch gekennzeichnet, dass** diese eine makroporöse Struktur aufweisen, die man durch Zugabe wenigstens eines Porogens zur organischen Phase erhält.

9. Verfahren zur Herstellung von Acrylatbasierten Ionenaustauschern mit Thiol-Funktionalität, **dadurch gekennzeichnet, dass** man

   a) eine organischen Phase enthaltend Monomertröpfchen aus wenigstens einer Acrylverbindung und wenigstens einer multifunktionell ethylenisch ungesättigten Verbindung sowie gegebenenfalls wenigstens ein Porogen und/oder gegebenenfalls einen Initiator oder eine Initiatorkombination in einer wässrigen Phase zu einem vernetzten Perlpolymerisat umsetzt und
   b) dieses vernetzte Perlpolymerisat mit weinigstens einem Aminothiol durch dessen Zugabe zur wässrigen Phase oder nach Zwischenisolierung der aus a) erhaltenen Perlpolymerisate, bevorzugt durch Filtration, Dekantieren oder Zentrifugation, durch deren erneute Suspendierung in einer wässrigen Phase und Zugabe des Aminothiols umsetzt.

10. Verfahren gemäß Anspruch 9, **dadurch gekennzeichnet, dass** sich an die Stufe b) ein Schritt

   c) die Umladung des aus Stufe b) erhaltenen Acrylatbasierten Ionenaustauschers mit Thiol-Funktionalität in die Na-Form anschließt.

11. Verfahren gemäß einem der Ansprüche 9 oder 10, **dadurch gekennzeichnet, dass** man als Acrylverbindung Acrylsäureester mit verzweigten oder unverzweigten $C_1$-$_6$-Alkylresten und Nitrile der Acrylsäure eingesetzt.

12. Verfahren gemäß Anspruch 11, **dadurch gekennzeichnet dass** Acrylsäuremethylester, Acrylsäurebutylester oder Acrylnitril, bevorzugt Mischungen von Acrylsäuremethylester und Acrylnitril oder von Acrylsäurebutylester und Acrylnitril eingesetzt werden.

13. Verfahren gemäß der Ansprüche 9 bis 12, **dadurch gekennzeichnet, dass** als monovinylaromatische Verbindungen Styrol, Methylstyrol, Ethylstyrol, Chlorstyrol oder Vinylpyridin eingesetzt werden.

14. Verfahren gemäß der Ansprüche 9 bis 13, **dadurch gekennzeichnet, dass** als multifunktionell ethylenisch ungesättigte Verbindungen Verbindungen der Reihe Butadien, Isopren, Divinylbenzol, Divinyltoluol, Trivinylbenzol, Divinylnaphtalin, Trivinylnaphtalin, Divinylcyclohexan, Trivinylcyclohexan, Triallycyanurat, Triallylamin, 1,7-Octadien, 1,5-Hexadien, Cyclopentadien, Norbornadien, Diethylenglykoldivinylether, Triethylenglykoldivinylether, Tetraethylenglykoldivinylether, Butandioldivinylether, Ethylenglycoldivinylether, Ethylenglycoldimethacrylat, Trimethylolpropantrimethacrylat, Allylmethacrylat, Cyclohexandimethanoldivinylether, Hexandioldivinylether oder Trimethylolpropantrivinylether, bevorzugt Divinylbenzol, 1,7-Octadien oder Diethylenglykoldivinylether, eingesetzt werden.

15. Verfahren gemäß der Ansprüche 9 bis 14, **dadurch gekennzeichnet, dass** in der organischen Phase Acrylnitril, Acrylsäuremethylester, Divinylbenzol, 1,7-Octadien, Dibenzoylperoxid oder Dichlorethan eingesetzt werden.

16. Verfahren gemäß der Ansprüche 9 bis 15, **dadurch gekennzeichnet, dass** in der wässrigen Phase Hydroxyethylcellulose in VE-Wasser, Natriumchlorid in VE-Wasser, das Natriumsalz von Naphthalinsulfonsäureformaldehyd-Kondensat oder Dinatriumhydrogenphosphat-Dodekahydrat eingesetzt werden wobei VE-Wasser für Wasser steht, das eine Leitfähigkeit von 0,1 bis 10 $\mu$S besitzt mit einem Gehalt an löslichen Metallionen nicht größer als 1 ppm für Fe, Co, Ni, Mo, Cr, Cu als individuelle Komponenten ist und nicht größer als 10 ppm für die Summe der genannten Metalle.

17. Verwendung der Acrylatbasierten Ionenaustauscher gemäß der Ansprüche 1 bis 8 zur Adsorption von Metallen, insbesondere Schwermetallen und Edelmetallen und ihren Verbindungen aus wässrigen Lösungen und organischen Flüssigkeiten, zur Entfernung von Schwermetallen oder Edelmetallen aus wässrigen Lösungen, insbesondere aus wässrigen Lösungen von Erdalkalien oder Alkalien, aus Solen der Alkalichloridelektrolyse, aus wässrigen Salzsäuren, aus Abwässern oder Rauchgaswäschen, aus flüssigen oder gasförmigen Kohlenwasserstoffen, zur Entfernung von Schwermetallen, insbesondere Quecksilber, Silber , Cadmium oder Blei aus Stoffen die während einer elektrolytischen Behandlung umgesetzt werden sowie für verschiedenste Einsatzgebiete in der chemischen Industrie, der Elektronik-Industrie, der Abfall-Entsorgungs/Verwertungs-Industrie oder der Galvano- oder Oberflächentechnik.

Europäisches Patentamt
European Patent Office
Office européen des brevets

# EUROPÄISCHER RECHERCHENBERICHT

Nummer der Anmeldung
EP 11 19 5334

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 200 473 A (JEANNERET-GRIS GILBERT [CH]) 6. April 1993 (1993-04-06)<br>* Spalte 7, Zeile 46 - Zeile 47; Ansprüche 1,7 *<br>* Spalte 4, Zeile 27 - Zeile 40 *<br>* Spalte 9, Zeile 28 - Zeile 61 *<br>----- | 1,17 | INV.<br>B01J39/20<br>C08F8/34<br>B01J47/00<br>C08F220/44 |
| X | LLOSA TANCO M A ET AL: "Preparation of porous chelating resin containing linear polymer ligand and the adsorption characteristics for harmful metal ions", REACTIVE & FUNCTIONAL POLYMERS, ELSEVIER SCIENCE PUBLISHERS BV, NL, Bd. 53, Nr. 2-3, 1. Dezember 2002 (2002-12-01), Seiten 91-101, XP004395998, ISSN: 1381-5148, DOI: 10.1016/S1381-5148(02)00165-7 | 1-8,17 | |
| Y | * Seite 94; Abbildung 2 *<br>* Seite 93, Absatz 2.2 *<br>* Seite 96, linke Spalte, Zeilen 1-3 *<br>* Seite 93, linke Spalte, Zeile 3 *<br>----- | 9-16 | **RECHERCHIERTE SACHGEBIETE (IPC)** |
| Y | WO 2009/013149 A2 (LANXESS DEUTSCHLAND GMBH [DE]; KLIPPER REINHOLD [DE]; SCHELHAAS MICHAE) 29. Januar 2009 (2009-01-29)<br>* Seite 2, Zeile 15 - Zeile 24 *<br>* Seite 3, Zeilen 8-9,10-14 *<br>----- | 9-16 | B01J<br>C08F |
| Y | US 5 369 132 A (ITO TSUYOSHI [JP] ET AL) 29. November 1994 (1994-11-29)<br>* Spalte 4, Zeile 15 - Zeile 21 *<br>* Spalte 6, Zeile 10 - Zeile 31 *<br>----- | 9-16 | |
| A | WO 02/49967 A2 (UNIV KENTUCKY RES FOUND [US]) 27. Juni 2002 (2002-06-27)<br>* Seite 4, Zeile 5 - Zeile 20 *<br>-----<br>-/-- | 1,5-7,9,10,17 | |

Der vorliegende Recherchenbericht wurde für alle Patentansprüche erstellt

| Recherchenort | Abschlußdatum der Recherche | Prüfer |
|---|---|---|
| Den Haag | 18. Mai 2012 | Hilgenga, Klaas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

2

EPO FORM 1503 03.82 (P04C03)

Europäisches Patentamt
European Patent Office
Office européen des brevets

## EUROPÄISCHER RECHERCHENBERICHT

Nummer der Anmeldung
EP 11 19 5334

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 5 073 575 A (BLANCH HARVEY W [US] ET AL) 17. Dezember 1991 (1991-12-17)<br>* Spalte 3, Zeile 3 - Zeile 21; Ansprüche 1,3 *<br>----- | 1,17 | |
| A | EP 1 964 608 A1 (LANXESS DEUTSCHLAND GMBH [DE]) 3. September 2008 (2008-09-03)<br>* Ansprüche 1,7,8,9 *<br>----- | 9-16 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 18. Mai 2012 | Hilgenga, Klaas |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 11 19 5334

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-05-2012

| Im Recherchenbericht angeführtes Patentdokument | Datum der Veröffentlichung | Mitglied(er) der Patentfamilie | Datum der Veröffentlichung |
|---|---|---|---|
| US 5200473 A | 06-04-1993 | KEINE | |
| WO 2009013149 A2 | 29-01-2009 | CN 101754809 A | 23-06-2010 |
| | | DE 102007034732 A1 | 29-01-2009 |
| | | EP 2173486 A2 | 14-04-2010 |
| | | US 2010252506 A1 | 07-10-2010 |
| | | WO 2009013149 A2 | 29-01-2009 |
| US 5369132 A | 29-11-1994 | KEINE | |
| WO 0249967 A2 | 27-06-2002 | AU 4507002 A | 01-07-2002 |
| | | EP 1355883 A2 | 29-10-2003 |
| | | JP 2004533990 A | 11-11-2004 |
| | | US 2002100732 A1 | 01-08-2002 |
| | | WO 0249967 A2 | 27-06-2002 |
| US 5073575 A | 17-12-1991 | KEINE | |
| EP 1964608 A1 | 03-09-2008 | CN 101310860 A | 26-11-2008 |
| | | DE 102007009072 A1 | 28-08-2008 |
| | | EP 1964608 A1 | 03-09-2008 |
| | | JP 2008208368 A | 11-09-2008 |
| | | US 2008234398 A1 | 25-09-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **NOBUHARU HISANO et al.** Entrapment of islets into reversible disulfide hydrogels. *J. Biomed. Mater. Res.,* 1998, vol. 40 (1), 115-123
- **VALESSA BARBIER et al.** Comb-like copolymers as self-coating, low-viscosity and high-resolution matrices for DNA sequencing. *Electrophoresis,* 2002, vol. 23, 1441-1449
- **STEPHANIE A. ROBB et al.** Simultaneously Physically and Chemically Gelling Polymer System Utilizing a Poly(NIPAAm-co-cysteamine)-Based Copolymer. *Biomacromolecules,* 2007, vol. 8, 2294-2300
- *Pure Appl. Chem.,* 2004, vol. 76 (4), 900